# EUROPÄISCHE PATENTANMELDUNG

(11) **EP 4 684 940 A1**
(43) Veröffentlichungstag der Anmeldung: **28.01.2026**
(21) Anmeldenummer: 25186674.5
(22) Anmeldetag: 01.07.2025
(51) Int. Cl.: B29C 51/44, A61C 7/08, A63B 71/08, B29C 33/44, B29C 37/00, B29C 39/36, B29L 31/00

(54) **VORRICHTUNG ZUM TRENNEN EINER MODELLFORM VON EINEM THERMOGEFORMTEN KUNSTSTOFFTEIL**

(30) Priorität: 25.07.2024 AT 506242024
(71) Anmelder: Dental Manufacturing Unit GmbH, 5412 Puch bei Hallein (AT)
(72) Erfinder: Huber, Martin, 5452 Pfarrwerfen (AT); Wörmer, Alfons, 5500 Bischofshofen (AT)
(74) Vertreter: Hübscher & Partner Patentanwälte GmbH

(57) **Zusammenfassung**

Es wird eine Vorrichtung zum Trennen einer, insbesondere dentalen, Modellform (7) von einem thermogeformten Kunststoffteil beschrieben. Die Vorrichtung umfasst eine Trennplattform (1), die eine Entnahmeöffnung (2), eine Hebel (10), sowie einen am Hebel (10) angesetzten, von einer Eingriffs- in eine Entnahmestellung entlang einer Abziehrichtung (5) verlagerbaren Abzieher (6) für die Modellform (7) aufweist. Erfindungsgemäß wird vorgeschlagen, dass der Abzieher (6) einen Eingriffshaken (8) für die Modellform (7) umfasst und dass einerseits der Hebel (10) über zwei einander in Hebellängsrichtung voneinander beabstandet angeordnete Schiebegelenke (12, 13) an der Trennplattform (1) angelenkt ist, wobei eines der Schiebegelenke (12) die Drehachse für den Hebel (10) bildet und / oder dass andererseits der Abzieher (6) über eine parallel zur Drehachse verlaufende Anlenkachse (11) am Hebel (10) angelenkt ist.

## Beschreibung

Die Erfindung bezieht sich auf eine Vorrichtung zum Trennen einer, insbesondere dentalen, Modellform von einem thermogeformten Kunststoffteil, insbesondere einer Kunststofffolie. Die Vorrichtung umfasst eine Trennplattform, die eine Entnahmeöffnung aufweist, deren Rand eine Anschlagsbegrenzung für einen freien Rand des Kunststoffteils bildet, und einen an der der Anschlagsbegrenzung abgewandten Seite der Trennplattform angeordneten, von einer Eingriffs- in eine Entnahmestellung entlang einer Abziehrichtung verlagerbaren Abzieher für die Modellform, der an einer parallel zu einer von der Entnahmeöffnung aufgespannten Ebene verlaufenden Drehachse gelagert und an einem um die Drehachse bewegbaren Hebel angesetzt ist.

Im Stand der Technik sind Vorrichtungen zum Trennen einer dentalen Modellform von einem thermogeformten Kunststoffteil, nämlich einer Tiefziehfolie, beispielsweise aus der AT524224B1 bekannt. Die Vorrichtung umfasst eine Trennplattform, die eine Entnahmeöffnung aufweist. An der der Anschlagsbegrenzung abgewandten Seite der Trennplattform ist außerdem ein Abzieher angeordnet, welcher von einer Eingriffs- in eine Entnahmestellung verlagerbar ist und zum Eingriff in einen Anschlag aufweist, der von einem auf dem Tiefziehmodell angeordneten Zugmittel, insbesondere einem Band, gebildet ist. Dabei ist der Abzieher an einer parallel zu einer von der Entnahmeöffnung aufgespannten Ebene verlaufenden Drehachse gelagert. Beim Entformen wird die Modellform mit der Tiefziehfolie über die Entnahmeöffnung, deren Rand eine Anschlagsbegrenzung für den freien Tiefziehrand der Tiefziehfolie bildet, positioniert. Danach wird der verlagerbare Abzieher in die Eingriffsstellung gebracht, in welcher der Abzieher in den Anschlag des Zugmittels eingreift. Schließlich wird der Abzieher über die Eingriffsstellung hinaus in die Entnahmestellung verlagert, in welcher das Tiefziehmodell durch die Entnahmeöffnung aus der Tiefziehfolie abgezogen wird

Es hat sich gezeigt, dass aufgrund unterschiedlicher Modellformkonturen und - hinterschnitten, die beispielsweise durch diverse Zahnfehlstellungen des zugrundeliegenden Gebisses bedingt sind, jeweils unterschiedliche Entformungskräfte einhergehen, denen beim Entformungsvorgang, d.h. beim Verlagern des Abziehers von der Eingriffs- in die Entnahmestellung, entsprechend Rechnung getragen werden muss. Die vorbekannten Vorrichtungen können in diesem Zusammenhang den Nachteil aufweisen, dass gerade bei zufolge komplexer Konturen und Hinterschnitten schwer entformbaren Kunststofffolien ein unerwünschter Materialverzug während des Entformens auftritt, was letztlich dazu führt, dass das betroffene thermogeformte Teils als Ausschuss abgeführt werden muss. Hinzu kommt, dass die vorbekannten Vorrichtung nicht zuletzt beim Wechsel auf andere Modellformen eine etwas nachteilige Handhabung aufweisen, da das beispielsweise festgeknotete Zugmittel dabei jedes Mal von neuem an der Modellform angebracht bzw. von der alten Modellform entfernt werde muss.

Es besteht somit der Bedarf an einer Vorrichtung der eingangs geschilderten Art, die trotz unterschiedlicher Modellformkonturen reproduzierbarere Entformungsergebnisse bei verringertem Ausschuss sowie eine verbesserte Handhabung ermöglicht.

Die Erfindung löst die gestellte Aufgabe dadurch, dass der Abzieher einen Eingriffshaken für die Modellform umfasst und dass einerseits der Hebel über zwei einander in Hebellängsrichtung voneinander beabstandet angeordnete Schiebegelenke an der Trennplattform angelenkt ist, wobei eines der Schiebegelenke die Drehachse für den Hebel bildet und / oder dass andererseits der Abzieher über eine parallel zur Drehachse verlaufende Anlenkachse am Hebel angelenkt ist.

Die sich zufolge dieser Merkmale ergebende Hebelkinematik ermöglicht in Kombination mit der beweglichen Lagerung des Hebels an der Trennplattform und / oder des Eingriffshakens am Hebel sowohl ein problemloses Einbringen des Eingriffshakens in die Modellform in Eingriffsstellung, als auch ein zuverlässiges Verlagern des Eingriffshakens entlang der Abziehrichtung in die Entnahmestellung, ohne dass der Eingriffshaken währenddessen aus seinem Eingriff mit der Modellform gelöst wird. Vorzugsweise ist an der Modellformunterseite ein Hakeneingriffsbereich vorgesehen, der beispielsweise als Eingriffstasche, als hintergreifbare Brücke oder dergleichen ausgestaltet sein kann. Besonders günstige Handhabungsbedingungen ergeben sich, wenn sowohl der Hebel über zwei einander in Hebellängsrichtung voneinander beabstandet angeordnete Schiebegelenke an der Trennplattform, als auch der Eingriffshaken des Abziehers über eine parallel zur Drehachse verlaufende Anlenkachse am Hebel angelenkt ist. Durch die erfindungsgemäßen Maßnahmen und der damit verbundenen Ausweichmöglichkeit des Eingriffshakens quer zur Abziehrichtung ergibt sich beim Entformungsvorgang gegenüber einer rein monoaxialen Abzugsbewegung, wie dies bei bekannten Zugbändern der Fall ist, eine besonders vorteilhafte Kraftübertragung vom Eingriffshaken in die Modellform. Aufgrund der lagerungsbedingten Hebelverhältnisse werden außerdem manuelle Bewegungskorrekturen per Hand auf einfache Weise bei geringem Kraftaufwand ermöglicht. Grundsätzlich ist allerdings auch denkbar, dass der Hebel mit einem geeigneten Aktuator antriebsverbunden sein kann.

Um die Handhabung weiter zu verbessern, wird vorgeschlagen, dass der Hebel an der Trennplattform über ein Rückstellelement abgestützt ist, das entlang einer zur Abziehrichtung geneigten Rückstellrichtung verläuft ist. Dadurch wird nach dem Entformen des Kunststoffteils die zunächst noch in Entnahmestellung befindliche Modellform durch das Rückstellement wieder in die Eingriffsstellung verlagert. Insbesondere für den Fall, dass der Abzieher nicht am Hebel angelenkt ist, kann grundsätzlich vorgesehen sein, dass auch der Abzieher bzw. Eingriffshaken mit einem Rückstellelement so antriebsverbunden ist, dass der Eingriffshaken zum Zwecke einer Ausgleichsbewegung quer zur Abziehrichtung verlagerbar ist.

Für besonders günstige Entformungsbedingungen empfiehlt es sich, dass wenigstens eines der beiden Schiebegelenke, vorzugsweise das der Drehachse gegenüberliegende Schiebegelenk, eine gekrümmte Schiebebahn umfasst. Die sich dadurch ergebende Kulissenführung ermöglicht sowohl eine Verlagerung des Hebels im Wesentlichen quer, als auch im Wesentlichen parallel zur Abziehrichtung.

Vorteilhafte konstruktive Bedingungen bei zuverlässiger Entformung ergeben sich außerdem, wenn das die Drehachse bildende Schiebegelenk ein am Hebel vorgesehenes Langloch und / oder dass das der Drehachse gegenüberliegende Schiebegelenk ein am Hebel vorgesehenes Führungselement, insbesondere einen Führungszapfen, zum Eingriff in eine Schiebebahn jenes Schiebegelenks umfasst.

Ein kompakte und verschleißfeste Bauweise lässt sich erzielen, wenn die Trennplattform eine sich in Abziehrichtung erstreckende Aufnahme, vorzugsweise eine Geradführung, umfasst, in der eine Modellformauflage aufgenommen und zwischen der Eingriffsstellung und der Entnahmestellung entlang der Abziehrichtung verlagerbar ist. In diesem Zusammenhang ist vorzugsweise vorgesehen, dass die formschlüssig in der Aufnahme der Trennplattform geführte Modelformauflage einen hülsenförmigen Grundkörper aufweist, der vorzugsweise an einem parallel zur Abziehrichtung verlaufenden Rückstellelement abgestützt ist. Für eine besonders einfache und zuverlässige Verlagerung kann außerdem vorgesehen sein, dass der Grundkörper an einem Paar Rückstellelemente abgestützt ist, die sich parallel zur Abziehrichtung erstrecken.

Um sowohl das Einbringen des Eingriffshakens in Eingriffsstellung weiter zu verbessern, als auch die Gefahr eines Abrutschens des Eingriffshakens von der Modellform beim Entformungsvorgang weiter zu reduzieren, wird vorgeschlagen, dass der Eingriffshaken des Abziehers eine Hakenbasis umfasst, von der ein im Wesentlichen normal dazu verlaufender Hakenendabschnitt abragt, der an seinem freien Ende eine Anlauffläche für einen an der Modellformunterseite vorgesehenen Hakeneingriffsbereich aufweist. Die Anlauffläche ist dabei dergestalt, dass ein Einbringen des Eingriffshakens in den Hakeneingriffsbereich mit möglichst geringem Kraftaufwand erfolgen kann, wobei sichergestellt sein muss, dass beim Verlagern des Abziehers zwischen der Eingriffsstellung und der Entnahmestellung im Zusammenspiel mit der beweglichen Lagerung des Hebels bzw. Hakens ein zuverlässiger Halt zwischen Eingriffshaken und Modellform gegeben ist.

Besonders günstige Bedingungen in Bezug auf sowohl das Einbringen als auch den zuverlässigen Halt des Eingriffshakens an der Modellform ergeben sich in diesem Zusammenhang, wenn der Hakenendabschnitt eine gekrümmte Kontur aufweist, die ausgehend von der Hakenbasis zu einem Scheitel ansteigt, der bezogen auf die Länge des Hakenendabschnitts in der dem freien Ende zugewandten Längenhälfte liegt. Ein verbessertes Eindringen kann sich grundsätzlich auch dadurch ergeben, dass sich die einander gegenüberliegenden lateralen Seiten des Hakenendabschnitts von der Hakenbasis zum freien Ende des Hakenendabschnitts hin verjüngen.

Die Erfindung bezieht sich auch auf ein Verfahren zum Trennen einer, insbesondere dentalen, Modellform von einem thermogeformten Kunststoffteil, insbesondere mit einer erfindungsgemäßen Vorrichtung. Dabei wird die Modellform mit dem Kunststoffteil über der Entnahmeöffnung, deren Rand eine Anschlagsbegrenzung für den freien Rand des Kunststoffteils bildet, positioniert und anschließend der verlagerbare Abzieher in eine Eingriffsstellung gebracht, in welcher der Abzieher über dessen Eingriffshaken in einen an der Modellformunterseite vorgesehenen Hakeneingriffsbereich eingreift. Der Abzieher wird in weiterer Folge über die Eingriffsstellung hinaus in eine Entnahmestellung verlagert, in welcher die Modellform aus dem Kunststoffteil durch die Entnahmeöffnung in Abziehrichtung abgezogen wird.

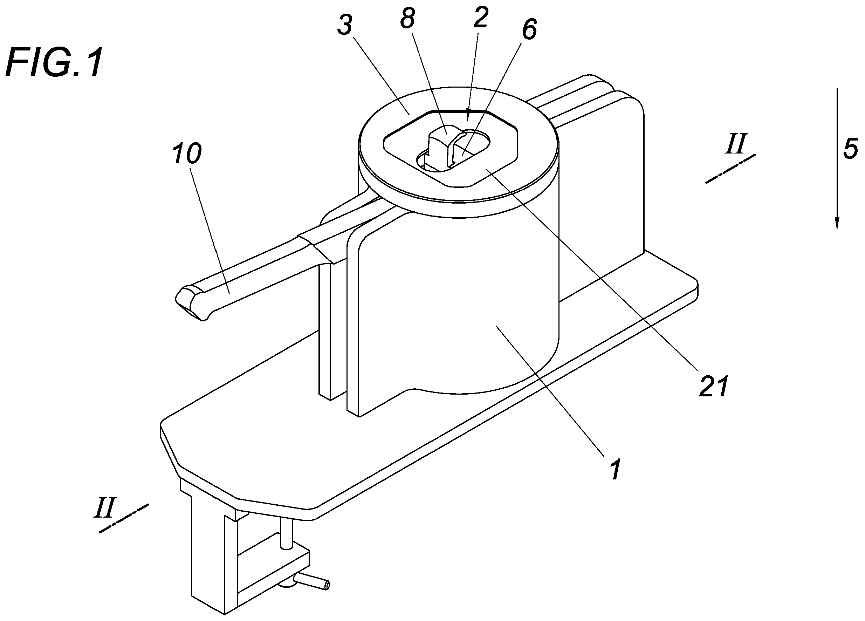

In der Zeichnung ist der Erfindungsgegenstand beispielsweise dargestellt. Es zeigen
- Fig. 1: ein schematischer Schrägriss einer erfindungsgemäßen Vorrichtung in einer ersten Ausführungsform,
- Fig. 2: ein Schnitt entlang der Linie II-II mit der in einer Eingriffsstellung befindlichen Vorrichtung,
- Fig. 3 eine der Fig. 2: entsprechende Darstellung mit der in einer Entnahmestellung befindlichen Vorrichtung, und
- Fig. 4: einen Schnitt entlang der Linie IV-IV.

Eine erfindungsgemäße Vorrichtung umfasst eine Trennplattform 1, die eine Entnahmeöffnung 2 aufweist, deren Rand eine Anschlagsbegrenzung 3 für einen freien Rand eines Kunststoffteils, beispielsweise einer thermoformbaren Kunststofffolie 4, bildet. An der der Anschlagsbegrenzung 3 abgewandten Seite der Trennplattform 1 ist ein von einer Eingriffs- in eine Entnahmestellung entlang einer Abziehrichtung 5 verlagerbarer Abzieher 6 für eine als Tiefziehform für die Kunststofffolie 4 dienende Modellform 7 angeordnet. Der Abzieher 6 weist zudem einen Eingriffshaken 8 für eine Modellform 7 auf.

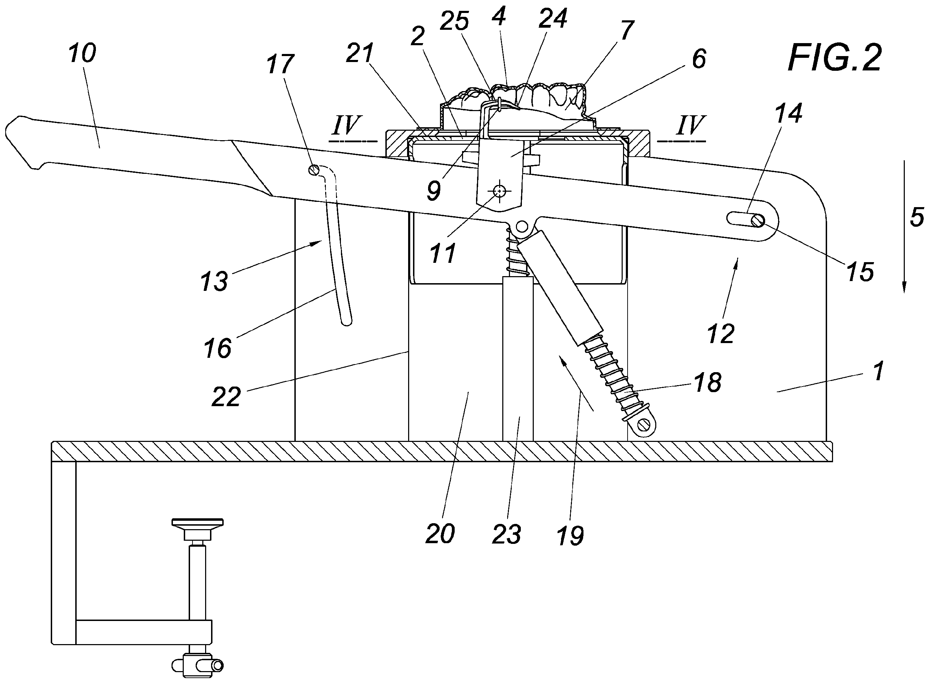

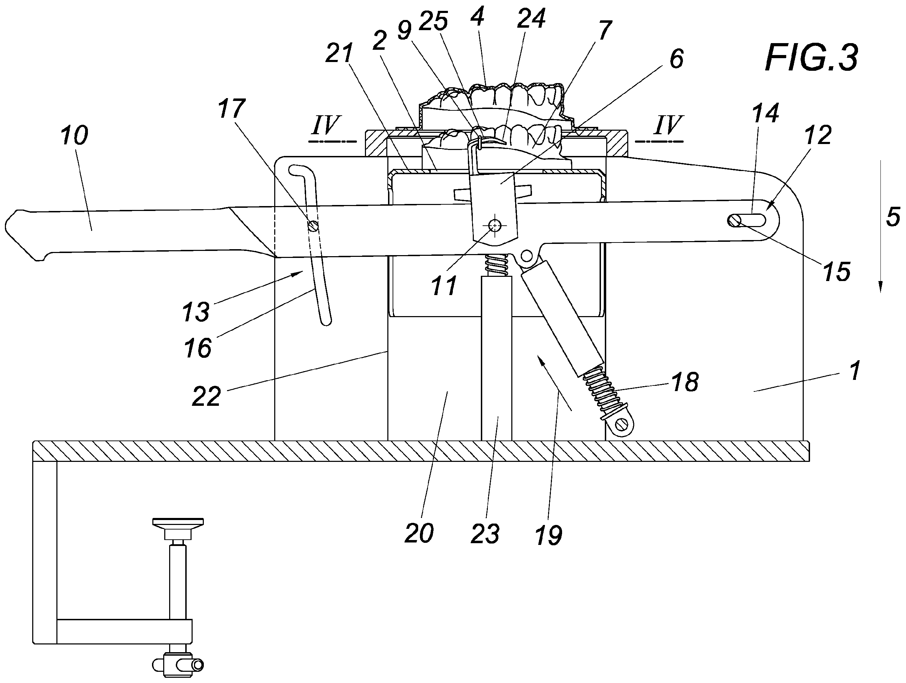

Der Abzieher 6 ist zwischen einer Eingriffsstellung (Fig. 2), bei welcher der Eingriffshaken 8 in einen Hakeneingriffsbereich 9 an der Modellformunterseite eingreift, und einer Entnahmestellung (Fig. 3), bei welcher die Kunststofffolie 4 von der Modellform 7 abgelöst worden ist, verlagerbar. Hierzu ist, wie dies in den Schnittdarstellungen gemäß Fig. 2 und Fig. 3 gezeigt wird, der Abzieher 6 an einer parallel zu einer von der Entnahmeöffnung 2 aufgespannten Ebene verlaufenden Drehachse gelagert und an einem um die Drehachse bewegbaren Hebel 10 angesetzt. Über eine parallel zur Drehachse verlaufende Anlenkachse 11 ist der Abzieher 6 außerdem am Hebel 10 angelenkt. Der Hebel 10 ist hingegen über zwei einander in Hebellängsrichtung voneinander beabstandet angeordnete Schiebegelenke 12, 13 an der Trennplattform 1 angelenkt. Dabei bildet das Schiebegelenk 12 die Drehachse für den Hebel 10.

Das Schiebegelenk 12 umfasst ein Langloch 14, in welches ein an der Trennplattform 1 angeordneter Führungszapfen 15 eingreift. Um auf konstruktiv günstige Weise im Bereich des gegenüberliegenden Schiebegelenks 13 eine Verlagerung des Hebels 10 im Wesentlichen quer, als auch im Wesentlichen parallel zur Abziehrichtung 5 zu ermöglichen, weist das Schiebegelenk 13 eine gekrümmte Schiebebahn 16 auf. Dabei umfasst der Hebel 10 im Bereich Schiebegelenks 13 selbst einen Führungszapfen 17, der wiederum in die an der Trennplattform 1 angeordnete, gekrümmte Schiebebahn 16 des Schiebegelenks 13 eingreift.

Zur Verbesserung der Handhabung ist der Hebel 10 an der Trennplattform 1 über ein Rückstellelement 18 abgestützt, das entlang einer zur Abziehrichtung 5 geneigten Rückstellrichtung 19 verläuft.

Die Trennplattform 1 umfasst auch eine sich in Abziehrichtung 5 erstreckende, eine Geradführung bildende Aufnahme 20, in der eine Modellformauflage 21 aufgenommen und zwischen der Eingriffsstellung und der Entnahmestellung entlang der Abziehrichtung 5 verlagerbar ist. Dabei weist die formschlüssig in der Aufnahme 20 geführte Modelformauflage 21 einen hülsenförmigen Grundkörper 22 auf, der an einem Paar Rückstellelemente 23 abgestützt ist, die sich parallel zur Abziehrichtung 5 erstrecken.

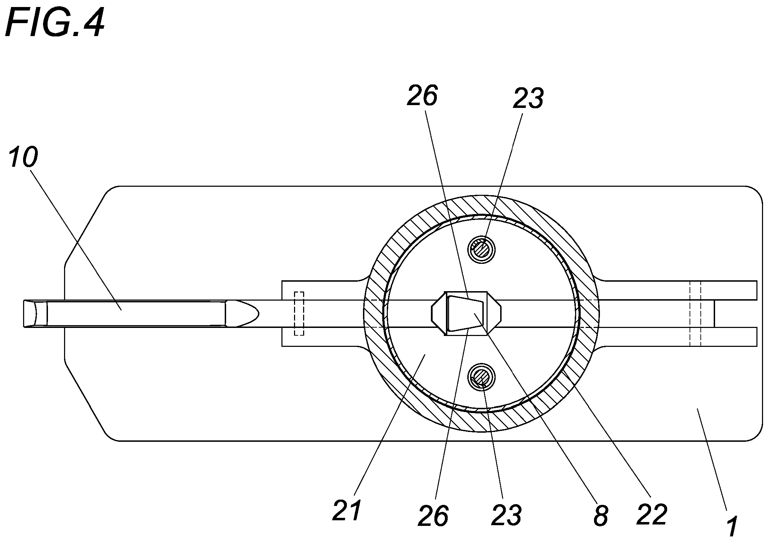

Um günstige Bedingungen in Bezug auf sowohl das Einbringen als auch den zuverlässigen Halt des Eingriffshakens 8 an der Modellform 7 zu ermöglichen, umfasst der Eingriffshaken 8 eine Hakenbasis, von der ein im Wesentlichen normal dazu verlaufender Hakenendabschnitt abragt, der an seinem freien Ende eine Anlauffläche 24 für den an der Modellformunterseite vorgesehenen Hakeneingriffsbereich 9 aufweist. Der Hakenendabschnitt weist eine gekrümmte Kontur auf, die ausgehend von der Hakenbasis zu einem Scheitel 25 ansteigt, der bezogen auf die Länge des Hakenendabschnitts in der dem freien Ende zugewandten Längenhälfte liegt. Wie dies außerdem in der Draufsicht gemäß Fig. 4 gezeigt wird, verjüngen sich die einander gegenüberliegenden lateralen Seiten 26 des Hakenendabschnitts von der Hakenbasis zum freien Ende des Hakenendabschnitts hin.

## Patentansprüche

1. Vorrichtung zum Trennen einer, insbesondere dentalen, Modellform (7) von einem thermogeformten Kunststoffteil, beispielsweise einer Kunststofffolie (4), mit einer Trennplattform (1), die eine Entnahmeöffnung (2) aufweist, deren Rand eine Anschlagsbegrenzung (3) für einen freien Rand des Kunststoffteils bildet, und mit einem an der der Anschlagsbegrenzung (3) abgewandten Seite der Trennplattform (1) angeordneten, von einer Eingriffs- in eine Entnahmestellung entlang einer Abziehrichtung (5) verlagerbaren Abzieher (6) für die Modellform (7), der an einer parallel zu einer von der Entnahmeöffnung (2) aufgespannten Ebene verlaufenden Drehachse gelagert und an einem um die Drehachse bewegbaren Hebel (10) angesetzt ist, **dadurch gekennzeichnet, dass** der Abzieher (6) einen Eingriffshaken (8) für die Modellform (7) umfasst und dass einerseits der Hebel (10) über zwei einander in Hebellängsrichtung voneinander beabstandet angeordnete Schiebegelenke (12, 13) an der Trennplattform (1) angelenkt ist, wobei eines der Schiebegelenke (12) die Drehachse für den Hebel (10) bildet und / oder dass andererseits der Abzieher (6) über eine parallel zur Drehachse verlaufende Anlenkachse (11) am Hebel (10) angelenkt ist.

2. Vorrichtung nach Anspruch 1, **dadurch gekennzeichnet, dass** der Hebel (10) an der Trennplattform (1) über ein Rückstellelement (18) abgestützt ist, das entlang einer zur Abziehrichtung (5) geneigten Rückstellrichtung (19) verläuft ist.

3. Vorrichtung nach Anspruch 1 oder 2, **dadurch gekennzeichnet, dass** wenigstens eines der beiden Schiebegelenke (12, 13) eine gekrümmte Schiebebahn (16) umfasst.

4. Vorrichtung nach einem der Ansprüche 1 bis 3, **dadurch gekennzeichnet, dass** das die Drehachse bildende Schiebegelenk (12) ein am Hebel (10) vorgesehenes Langloch (14) und / oder dass das der Drehachse gegenüberliegende Schiebegelenk (13) ein am Hebel (10) vorgesehenes Führungselement, insbesondere einen Führungszapfen (17), zum Eingriff in eine Schiebebahn (16) jenes Schiebegelenks (13) umfasst.

5. Vorrichtung nach einem der Ansprüche 1 bis 4, **dadurch gekennzeichnet, dass** die Trennplattform (1) eine sich in Abziehrichtung (5) erstreckende Aufnahme (20), vorzugsweise eine Geradführung, umfasst, in der eine Modellformauflage (21) aufgenommen und zwischen der Eingriffsstellung und der Entnahmestellung entlang der Abziehrichtung (5) verlagerbar ist.

6. Vorrichtung nach Anspruch 5, **dadurch gekennzeichnet, dass** die formschlüssig in der Aufnahme der Trennplattform (1) geführte Modelformauflage (21) einen hülsenförmigen Grundkörper (22) aufweist, der vorzugsweise an einem parallel zur Abziehrichtung (5) verlaufenden Rückstellelement (24) abgestützt ist.

7. Vorrichtung nach einem der Ansprüche 1 bis 6, **dadurch gekennzeichnet, dass** der Eingriffshaken (8) des Abziehers (6) eine Hakenbasis umfasst, von der ein im Wesentlichen normal dazu verlaufender Hakenendabschnitt abragt, der an seinem freien Ende eine Anlauffläche (24) für einen an der Modellformunterseite vorgesehenen Hakeneingriffsbereich (9) aufweist.

8. Vorrichtung nach Anspruch 7, **dadurch gekennzeichnet, dass** der Hakenendabschnitt eine gekrümmte Kontur aufweist, die ausgehend von der Hakenbasis zu einem Scheitel (25) ansteigt, der bezogen auf die Länge des Hakenendabschnitts in der dem freien Ende zugewandten Längenhälfte liegt.

9. Vorrichtung nach Anspruch 7 oder 8, **dadurch gekennzeichnet, dass** sich die einander gegenüberliegenden lateralen Seiten (26) des Hakenendabschnitts von der Hakenbasis zum freien Ende des Hakenendabschnitts hin verjüngen.

10. Verfahren zum Trennen einer, insbesondere dentalen, Modellform (7) von einem thermogeformten Kunststoffteil, beispielsweise einer Kunststofffolie (4), insbesondere mit einer Vorrichtung nach einem der vorangegangenen Ansprüche, **dadurch gekennzeichnet, dass** die Modellform (7) mit dem Kunststoffteil über eine Entnahmeöffnung (2), deren Rand eine Anschlagsbegrenzung (3) für den freien Rand des Kunststoffteils bildet, positioniert wird und anschließend ein verlagerbarer Abzieher (6) in eine Eingriffsstellung gebracht wird, in welcher der Abzieher über dessen Eingriffshaken (8) in eine an der Modellformunterseite vorgesehenen Hakeneingriffsbereich (9) eingreift und über diese Eingriffsstellung hinaus in eine Entnahmestellung verlagert wird, in welcher die Modellform (7) aus dem Kunststoffteil durch die Entnahmeöffnung (2) in einer Abziehrichtung (5) abgezogen wird.
